# EUROPÄISCHE PATENTSCHRIFT

(11) **EP 3 817 949 B1**
(45) Veröffentlichungstag und Bekanntmachung des Hinweises auf die Patenterteilung: **15.06.2022**
(21) Anmeldenummer: 19731951.0
(22) Anmeldetag: 17.06.2019
(51) Int. Cl.: B60R 1/04

(54) **MONTAGEBAUGRUPPE EINES FAHRZEUG-INNENSPIEGELS ODER ANDEREN SCHEIBEN- ANBAUTEILS**
MOUNTING ASSEMBLY OF A VEHICLE'S INTERNAL MIRROR OR OTHER DISC EXTENSION
MODULE D'ASSEMBLAGE D'UN MIROIR INTÉRIEUR DE VÉHICULE OU D'AUTRE PIÈCE RAPPORTÉE VITRÉE

(30) Priorität: 05.07.2018 EP 18181947
(43) Veröffentlichungstag der Anmeldung: 12.05.2021
(73) Patentinhaber: Saint-Gobain Glass France, 92400 Courbevoie (FR)
(72) Erfinder: BARRAS, Claire, 52134 Herzogenrath (DE); LAKSHMANAN, Martin, 52070 Aachen (DE)
(74) Vertreter: Weber, Sophie
(86) Internationale Anmeldenummer: PCT/EP2019/065817
(87) Internationale Veröffentlichungsnummer: WO 2020/007595

(56) Entgegenhaltungen:
- DE-U1- 9 112 912
- FR-A- 1 580 557
- FR-A1- 2 318 044
- GB-A- 172 543

## Beschreibung

Die Erfindung betrifft eine Montagebaugruppe eines Fahrzeug-Innenspiegels oder anderen Scheiben-Anbauteils gemäß dem Oberbegriff von Anspruch 1. Derartige Montagebaugruppen werden verbreitet eingesetzt zur Befestigung des Innen-Rückspiegels im mittleren oberen Bereich der Frontscheibe von PKWs, aber auch zur Anbringung von externen Navigationsgeräten oder ggfs. auch von Mobiltelefonen oder anderen mobilen Geräten an der Frontscheibe oder auch anderen Scheibe eines Land-, Wasser- oder Luftfahrzeugs. Obwohl der Schwerpunkt des Einsatzes derartiger Montagebaugruppen in der PKW-Produktion bzw. -Zusatzausstattung liegt, ist er keineswegs auf diese beschränkt.

Es gibt eine große Vielzahl verschiedener Konstruktionen von Montagebaugruppen der genannten Art, und allen gemeinsam ist, dass für eine haltbare Befestigung an der Scheibe gesorgt werden muss. Es ist bekannt, zu diesem Zweck ein Scheibenhaftelement vorzusehen, welches gewissermaßen die Schnittstelle zwischen der Fahrzeugscheibe und dem eigentlichen Spiegelträger bildet, also an einer Oberfläche mit dem Spiegelträger verbunden ist und eine freie Oberfläche zur Verbindung mit der Fahrzeugscheibe hat. Montagebaugruppen, die ein derartiges Scheibenhaftelement aufweisen, sind beispielsweise in der US 2006/0061008 A1 beschrieben.

Die dort beschriebenen und andere bekannte Scheibenhaftelemente sind scheiben- oder plattenförmig, d.h. ihre Umfangsfläche verläuft rechtwinklig zur freien Oberfläche.

Aus der FR 1 580 557 ist ein Innenrückspiegel für Fahrzeuge nach dem Oberbegriff von Anspruch 1 bekannt, insbesondere für Kraftfahrzeuge, dessen Träger durch Kleben an der Windschutzscheibe befestigt ist. Der Träger wird mittels einer beidseitig klebenden Folie auf die Windschutzscheibe geklebt. Der Spiegel ist mittels eines Scharniers an einem Arm angebracht und der Arm durch eine Schraube am Träger befestigt.

Es ist Aufgabe der Erfindung, eine in ihrer Funktionsfähigkeit verbesserte Montagebaugruppe der gattungsgemäßen Art bereitzustellen, die insbesondere eine verbesserte und auch unter harten Einsatzbedingungen zuverlässige Haftung an der Fahrzeugscheibe gewährleistet. Insbesondere soll mit einer verbesserten Konstruktion der Tatsache Rechnung getragen werden, dass im Fahrzeugbau zunehmend leichtere Scheiben eingesetzt werden, die unvermeidlich eine verringerte mechanische Stabilität haben und daher anfällig für punktuelle mechanische Belastungen sind, wie sie bei der Handhabung eines auf der Scheibe montierten Spiegels oder ähnlichen Anbauteils, wie z. B. Displays, ausgehen können.

Diese Aufgabe wird durch eine Montagebaugruppe mit den Merkmalen des Anspruchs 1 gelöst. Zweckmäßige Fortbildungen des Erfindungsgedankens sind Gegenstand der abhängigen Ansprüche.

Erfindungsgemäß hat das Scheibenhaftelement die Form eines flachen Kegelstumpfes oder einer flachen Pyramide, derart, dass die zweite Oberfläche kleiner als die freie erste Oberfläche ist. Dies hat zur Folge, dass der Umfangsrand des Scheibenhaftelementes einen spitzen Winkel mit der zur Anbringung an der Scheibe dienenden freien Oberfläche bzw. im montierten Zustand einen stumpfen Winkel mit der Scheibe einschließt. Nach den Erkenntnissen der Erfinder ist dieser stumpfe Winkel insofern vorteilhaft, als er Spannungskonzentrationen an der Umfangskante des Haftelementes bei Belastung des Spiegels wesentlich verringert.

Unter Fahrzeug-Innenspiegel werden im Sinne der Erfindung auch andere Fahrzeug-Anbauteile wie z. B. Displays, Navigationsgeräte oder Smartphone-Halter verstanden.

In einer Ausführung hat das Scheibenhaftelement die Form eines geraden Kreiskegelstumpfes. Entsprechend hat bei rechteckiger oder quadratischer Grundfläche das Scheibenhaftelement die Form einer Pyramide mit rechteckiger, insbesondere quadratischer, Grundfläche. Denkbar sind auch Ausführungen, in denen das Scheibenhaftelement die Form eines schrägen Kreiskegelstumpfes oder Kegelstumpfes mit elliptischer Grundfläche oder auch einer schiefen Pyramide oder einer Pyramide mit vieleckiger Grundfläche hat. Die mit der Erfindung erzielten Vorteile sind auch solchen Ausführungen eigen, in der Praxis dürften diese aber eher eine geringere Rolle spielen.

Üblicherweise wird bei der Realisierung der Erfindung die zweite Oberfläche des Scheibenhaftelementes parallel zur freien ersten Oberfläche sein. Grundsätzlich ist die Erfindung aber auch bei Montagebaugruppen einsetzbar, bei denen das Scheibenhaftelement zur Erfüllung bestimmter Anforderungen gegeneinander geneigte Hauptoberflächen hat.

Nach den Erkenntnissen der Erfinder ist es zweckmäßig, dass der Kegelwinkel des Kegelstumpfes bzw. Pyramidenwinkel der Pyramide zwischen 5° und 45°, insbesondere zwischen 10° und 30°, liegt. Dies ergibt einen stumpfen Winkel zwischen Umfangsrand des Scheibenhaftelementes und Scheibenoberfläche im Bereich zwischen 135° und 175°, insbesondere zwischen 150° und 170°, der für eine ausreichende Spannungsverteilung am Anbringungsort des Spiegels bzw. Anbauteiles sorgt.

Erfindungsgemäß ist es vorgesehen, dass das Scheibenhaftelement aus einem kompressiblen und/oder biegsamen Material besteht, derart, dass sich im montierten Zustand die freie erste Oberfläche in Anpassung an eine gekrümmte angrenzende Scheibenoberfläche verformt, während die zweite Oberfläche sich nicht oder nur wenig verformt. Diese Ausführung ist insbesondere vorteilhaft, wenn das Scheibenhaftelement einen sehr geringen Kegelwinkel bzw. Pyramidenwinkel hat und seine Kontaktfläche zur Scheiben dadurch relativ groß wird. Da moderne Fahrzeugscheiben, insbesondere Windschutzscheiben, häufig über große Flächenbereiche gekrümmt sind, passt sich ein entsprechend kompressives oder biegsames Scheibenhaftelement besser an die Kontur der Scheibenoberfläche an als ein starres Element.

In aus derzeitiger Sicht bevorzugten Ausführungen ist die freie erste und/oder die zweite Oberfläche des Scheibenhaftelementes mit Klebstoff beschichtet. Grundsätzlich kommt für die freie erste Oberfläche auch das Vorsehen eines andersartigen Haftmittels in Betracht, etwa für Spezialfälle, in denen eine Abnehmbarkeit des Spiegels oder anderen Anbauteils (z. B. Displays, Navigationsgerätes oder Smartphone-Halters) gewünscht ist.

Eine weitere Ausgestaltung der Erfindung kann vorsehen, dass die erste Stirnfläche des Spiegelträgers um mindestens 25 % größer als die angrenzende zweite Oberfläche des Scheibenhaftelementes ist. Um speziell bei Festlegung eines geringen Kegel- oder Pyramidenwinkels zu vermeiden, dass die freie Oberfläche (Grundfläche) des Scheibenhaftelementes übermäßig groß wird, kann das Scheibenhaftelement insgesamt verkleinert ausgeführt werden. Damit wird seine den Spiegelträger kontaktierende zweite Oberfläche natürlich ebenfalls verkleinert, und es kann zweckmäßig sein, dass man den Spiegelträger nicht verkleinert, sondern die benachbarte Stirnfläche des Spiegelträgers über das Scheibenhaftelement deutlich überstehen lässt. Bei Wahl eines hinreichend stabilen Verbindungsmittels zur Verbindung von Scheibenhaftelement und Spiegelträger stellt dies keinen Nachteil dar.

In einer weiteren Ausführung ist entsprechend vorgesehen, dass die zweite Oberfläche des Scheibenhaftelementes und die angrenzende erste Stirnfläche des Spiegelträgers mit zueinander korrespondierend ausgeführten Verbindungsmitteln zum formschlüssigen Verbinden des Spiegelträgers mit dem Scheibenhaftelement versehen ist. Neben den üblichen Vorteilen einer formschlüssigen Verbindung bietet diese Ausführung auch die Möglichkeit, den Spiegelträger bzw. Träger des Anbauteils (und damit den Spiegel oder das Anbauteil) abzunehmen, ohne die Verbindung zwischen der Scheibe und dem Scheibenhaftelement zerstören zu müssen. Die Verbindung kann durch an sich bekannte Rast- oder Verriegelungsmittel zusätzlich gesichert sein.

In weiteren Ausführungen ist der Spiegelträger mehrteilig ausgeführt, und er umfasst ein Spiegelfußteil, welches die mit dem Spiegelhaftelement verbundene erste Stirnfläche hat, und ein mit dem Spiegelfußteil, insbesondere bewegbar, verbundenes Auslegerteil, welches die zur Anbringung des Spiegelgehäuses ausgebildete zweite Stirnfläche hat.

Eine solche Ausführung bietet neben dem Vorteil, den Spiegel bzw. das Anbauteil wunschgemäß verstellen bzw. ausrichten zu können, auch die Möglichkeit, an der Schnittstelle zwischen Spiegelfußteil und Auslegerteil Mittel vorzusehen, welche auf den Spiegel bzw. das Anbauteil einwirkende Kräfte teilweise abfangen und nicht vollständig auf das Scheibenhaftelement übertragen. Die durch dessen erfindungsgemäße Formgebung erzielten Vorteile können also durch eine solche Ausführung des Spiegelträgers verstärkt werden.

Vorteile und Zweckmäßigkeiten der Erfindung ergeben sich im Übrigen aus der nachfolgenden Beschreibung von Ausführungsbeispielen anhand der Figuren. Von diesen zeigen:
- Fig. 1a und 1b: skizzenartige Darstellungen einer ersten Ausführungsform der Erfindung,
- Fig. 2a und 2b: skizzenartige Darstellungen einer zweiten Ausführungsform der Erfindung,
- Fig. 3: eine skizzenartige Darstellung zur Erläuterung einer Ausgestaltung der Erfindung und
- Fig. 4: eine schematische Darstellung einer Montagebaugruppe gemäß einer weiteren Ausführungsform der Erfindung.

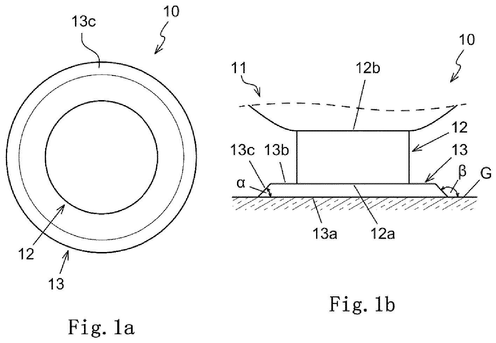

Fig. 1a und 1b zeigen in Art einer Draufsicht und Seitenansicht eine erste beispielhafte Montagebaugruppe 10 eines Fahrzeug-Innenspiegels, von dem in Fig. 1b ein Abschnitt eines Spiegelgehäuses 11 gezeigt ist. Die Montagebaugruppe 10 umfasst einen hier schematisch als Zylinder dargestellten Spiegelträger 12 und einen die Form eines flachen, geraden Kreiskegelstumpfes aufweisendes Scheibenhaftelement 13.

Das Scheibenhaftelement 13 hat eine größere erste Oberfläche 13a, mit der es im in Fig. 1b dargestellten montierten Zustand an einer Glasscheibe G angebracht ist, und eine kleinere zweite Oberfläche 13b, an der es mit dem Spiegelträger 12 verbunden ist. Aufgrund der Kegelstumpfform des Scheibenhaftelementes verläuft seine Umfangsfläche 13c zu beiden (Haupt-)Oberflächen 13a, 13b geneigt, und zwar unter einem Kegelwinkel a. Dieser liegt in der dargestellten Ausführung bei ca. 45°. Dementsprechend ist ein Winkel β, den die Umfangsfläche 13c mit der Oberfläche der Scheibe G einschließt, ein stumpfer Winkel und liegt im gezeigten Beispiel bei ca. 135°.

Der Spiegelträger 12 hat eine erste Stirnfläche 12a, auf der das Scheibenhaftelement 13 mit dessen zweiter Oberfläche 13b sitzt, und eine zweite Stirnfläche 12b, die mit dem Spiegelgehäuse 11 verbunden ist. Die Verbindungen des Spiegelträgers 12 mit dem Scheibenhaftelement 13 einerseits und dem Spiegelgehäuse 13 andererseits können als Klebeverbindungen ausgeführt sein.

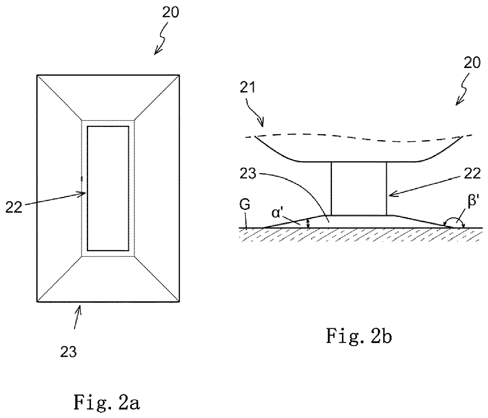

Fig. 2a und 2b zeigen eine weitere beispielhafte Montagebaugruppe 20. Der grundsätzliche Aufbau entspricht demjenigen der Montagegruppe 10 nach Fig. 1a und 1b und wird daher hier nicht nochmals ausführlich beschrieben. Gleichartige bzw. funktional entsprechende Komponenten sind mit an Fig. 1a und 1b angelehnten Bezugsziffern bezeichnet.

Ein erster wesentlicher Unterschied zur vorstehend beschriebenen Ausführungsform besteht darin, dass der Scheibenträger 22 quaderförmig ist und das Scheibenhaftelement 23 die Form einer flachen Pyramide mit rechteckiger Grundform hat. Ein zweiter Unterschied besteht darin, dass der Pyramidenwinkel a' hier wesentlich kleiner als der Kegelwinkel α des Scheibenhaftelementes 13 aus Fig. 1a und 1b ist und bei ca. 10° liegt. Entsprechend ist der Winkel β', den die stark geneigte Rand- bzw. Umfangsfläche des Scheibenhaftelementes 23 mit der Glasscheibe G einschließt, wesentlich größer und liegt bei ca. 170°.

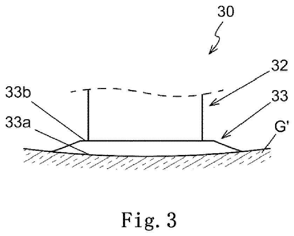

Fig. 3 zeigt schematisch eine Montagebaugruppe 30, die wiederum einen Spiegelträger 32 und ein Scheibenhaftelement 33 aufweist, an einer gekrümmten Glasscheibe G' montiert. Durch Wahl eines sowohl kompressiblen als auch biegeelastischen Materials für das Scheibenhaftelement 33 wird erreicht, dass dessen mit der Glasscheibe G' verbundene freie Oberfläche 33a sich an die Krümmung der Glasscheibe perfekt anschmiegt und so eine optimale Haftung gewährleistet, während die mit dem Spiegelträger 32 verbundene zweite Oberfläche 33b spannungsfrei eben bleiben kann und somit andererseits eine zuverlässige Verbindung mit dem Scheibenträger sichergestellt ist. Derartige Eigenschaften des Scheibenhaftelementes 33 können mit geeigneten Kunststoffmaterialien, wie PU-Materialien, erreicht werden, die dem Fachmann an sich bekannt und marktgängig sind.

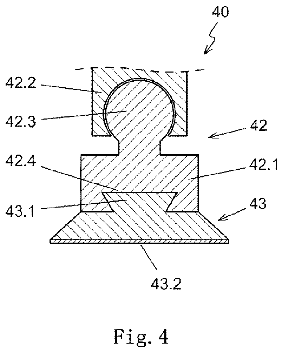

Fig. 4 zeigt in Art einer Querschnittsdarstellung eine weitere Montagebaugruppe 40, deren Spiegelträger 42 mehrteilig ausgeführt ist und ein Spiegelfußteil 42.1 und ein Auslegerteil 42.2 umfasst. Beide Teile sind durch ein reibungsgedämpftes Kugelgelenk 42.3 schwenkbar miteinander verbunden.

Der Spiegelträger 42 und das Scheibenhaftelement 43 sind hier durch eine Schwalbenschwanzverbindung 42.4/43.1 formschlüssig miteinander verbunden. Zusätzlich können (nicht dargestellte) Rastmittel zur Verriegelung beider Teile miteinander oder eine (ebenfalls nicht dargestellte) Klebeverbindung vorgesehen sein. Die freie Oberfläche des Haftelementes 43 ist mit einer Klebstoffschicht 43.2 zur Anbringung an einer Glasscheibe oder anderen Montagefläche versehen.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen der anhängenden Ansprüche liegen.

### Bezugszeichenliste

- 10; 20; 30; 40: Montagebaugruppe
- 11, 21: Spiegelgehäuse
- 12, 22, 32, 42: Spiegelträger
- 12a: erste Stirnfläche des Spiegelträgers
- 12b: zweite Stirnfläche des Spiegelträgers
- 13; 23; 33; 43: Scheibenhaftelement
- 13a; 33a: freie erste Oberfläche des Scheibenhaftelementes
- 13b; 33b: zweite Oberfläche des Scheibenhaftelementes
- 13c: geneigte Umfangsfläche des Scheibenhaftelementes
- 42.1: Spiegelfußteil
- 42.2: Auslegerteil
- 42.3: Kugelgelenk
- 42.4, 43.1: Schwalbenschwanzverbindung
- 43.2: Klebeschicht
- G; G': Glasscheibe
- α; α': Kegel- bzw. Pyramidenwinkel
- β; β': Winkel zwischen Umfangsfläche und Glasoberfläche

## Patentansprüche

1. Montagebaugruppe (10; 20; 30; 40) eines Fahrzeug-Innenspiegels, welche aufweist:
ein Scheibenhaftelement (13; 23; 33; 43), das im Wesentlichen plattenförmig oder scheibenförmig geformt ist und eine als Haftfläche ausgebildete freie erste Oberfläche (13a; 33a) zum Befestigen der Montagebaugruppe an der Innenseite einer Fahrzeugscheibe (G; G') sowie eine zweite Oberfläche (13b; 33b) hat, und einen Spiegelträger (12; 22; 32; 42), der eine erste Stirnfläche (12a), auf der das Scheibenhaftelement mit dessen zweiter Oberfläche sitzt, und eine zweite Stirnfläche (12b) hat, die zur Anbringung eines Gehäuses (11; 21) des Fahrzeug-Innenspiegels ausgebildet ist, wobei das Scheibenhaftelement die Form eines flachen Kegelstumpfes oder einer flachen Pyramide hat, derart, dass die zweite Oberfläche kleiner als die freie erste Oberfläche ist,
**dadurch gekennzeichnet, dass**
das Scheibenhaftelement (33) aus einem kompressiblen und/oder biegsamen Material besteht, derart, dass sich im montierten Zustand die freie erste Oberfläche (33a) in Anpassung an eine gekrümmte angrenzende Scheibenoberfläche (G') verformt, während die zweite Oberfläche (33b) sich nicht oder nur wenig verformt.

2. Montagebaugruppe nach Anspruch 1, wobei das Scheibenhaftelement die Form eines geraden Kreiskegelstumpfes (13) hat.

3. Montagebaugruppe nach Anspruch 1, wobei das Scheibenhaftelement die Form einer Pyramide (23) mit rechteckiger, insbesondere quadratischer, Grundfläche hat.

4. Montagebaugruppe nach einem der vorangehenden Ansprüche, wobei die zweite Oberfläche (13b) des Scheibenhaftelementes (13) parallel zur freien ersten Oberfläche (13a) ist.

5. Montagebaugruppe nach einem der vorangehenden Ansprüche, wobei der Kegelwinkel (α) des Kegelstumpfes (13) bzw. Pyramidenwinkel der Pyramide (23) zwischen 5° und 45°, insbesondere zwischen 10° und 30°, liegt.

6. Montagebaugruppe nach einem der vorangehenden Ansprüche, wobei die freie erste und/oder die zweite Oberfläche des Scheibenhaftelementes (13; 23; 33; 43) mit Klebstoff beschichtet ist.

7. Montagebaugruppe nach einem der vorangehenden Ansprüche, wobei die erste Stirnfläche des Spiegelträgers um mindestens 25 % größer als die angrenzende zweite Oberfläche des Scheibenhaftelementes (13; 23; 33; 43) ist.

8. Montagebaugruppe nach einem der vorangehenden Ansprüche, wobei die zweite Oberfläche des Scheibenhaftelementes (43) und die angrenzende erste Stirnfläche des Spiegelträgers (42) mit zueinander korrespondierend ausgeführten Verbindungsmitteln (42.4; 43.1) zum formschlüssigen Verbinden des Spiegelträgers mit dem Scheibenhaftelement (13; 23; 33; 43) versehen sind.

9. Montagebaugruppe nach einem der vorangehenden Ansprüche, wobei der Spiegelträger mehrteilig ausgeführt ist und ein Spiegelfußteil, welches die mit dem Spiegelhaftelement verbundene erste Stirnfläche hat, und ein mit dem Spiegelfußteil, insbesondere bewegbar, verbundenes Auslegerteil umfasst, welches die zur Anbringung des Spiegelgehäuses ausgebildete zweite Stirnfläche hat.

## Claims

1. Mounting assembly (10; 20; 30; 40) of a vehicle interior mirror, which comprises:
a pane adhesive element (13; 23; 33; 43) shaped in a substantially plate-shaped or disc-shaped manner and having a free first surface (13a; 33a) designed as an adhesive surface for fastening the mounting assembly to the inner-side of a vehicle pane (G; G'), and a second surface (13b; 33b) and
a mirror mount (12; 22; 32; 42) having a first end face (12a) on which the pane adhesive element is seated with the second surface thereof, and having a second end face (12b) designed for mounting a housing (11; 21) of the vehicle interior mirror, wherein the pane adhesive element has the shape of a flat truncated cone or a flat pyramid such that the second surface is smaller than the free first surface,
**characterized in that**
the pane adhesive element (33) consists of a compressible and/or flexible material such that, in the mounted state, the free first surface (33a) deforms in adaptation to a curved adjacent pane surface (G'), while the second surface (33b) does not deform or deforms only slightly.

2. Mounting assembly according to claim 1, wherein the pane adhesive element has the shape of a straight circular truncated cone (13).

3. Mounting assembly according to claim 1, wherein the pane adhesive element has the shape of a pyramid (23) with a rectangular, in particular square, base.

4. Mounting assembly according to one of the preceding claims, wherein the second surface (13b) of the pane adhesive element (13) is parallel to the free first surface (13a).

5. Mounting assembly according to one of the preceding claims, wherein the cone angle (α) of the truncated cone (13) or pyramid angle of the pyramid (23) is between 5° and 45°, in particular between 10° and 30°.

6. Mounting assembly according to one of the preceding claims, wherein the free first and/or the second surface of the pane adhesive element (13; 23; 33; 43) is coated with adhesive.

7. Mounting assembly according to one of the preceding claims, wherein the first end face of the mirror mount is at least 25% larger than the adjacent second surface of the pane adhesive element (13; 23; 33; 43).

8. Mounting assembly according to one of the preceding claims, wherein the second surface of the pane adhesive element (43) and the adjacent first end face of the mirror mount (42) are provided with mutually corresponding connection means (42.4; 43.1) for the positive connection of the mirror mount to the pane adhesive element (13; 23; 33; 43).

9. Mounting assembly according to one of the preceding claims, wherein the mirror mount is of multi-part design and includes a mirror foot part, which has the first end face connected to the mirror adhesive element, and a cantilever part connected to the mirror foot part, in particular movably, which has the second end face designed for mounting the mirror housing.

## Revendications

1. - Ensemble de montage (10 ; 20 ; 30 ; 40) d'un rétroviseur intérieur de véhicule, lequel présente :
un élément (13 ; 23 ; 33 ; 43) d'adhérence à la vitre, qui est formé sensiblement en forme de plaque ou en forme de disque et qui a une première surface libre (13a ; 33a), configurée en tant que surface adhésive, pour la fixation de l'ensemble de montage sur le côté intérieur d'une vitre de véhicule (G ; G'), ainsi qu'une seconde surface (13b ; 33b), et un support de rétroviseur (12 ; 22 ; 32 ; 42) qui a une première face d'extrémité (12a) sur laquelle l'élément d'adhérence à la vitre repose par sa deuxième surface, et une seconde face d'extrémité (12b), qui est configurée pour le montage d'un boîtier (11 ; 21) du rétroviseur intérieur de véhicule, l'élément d'adhérence à la vitre ayant la forme d'un tronc de cône plat ou d'une pyramide plate, de telle sorte que la seconde surface est plus petite que la première surface libre,
**caractérisé par le fait que**
l'élément (33) d'adhérence à la vitre est constitué d'un matériau compressible et/ou flexible, de telle sorte qu'à l'état monté, la première surface libre (33a) se déforme en conformité à une surface de vitre adjacente courbe (G'), tandis que la seconde surface (33b) ne se déforme pas ou ne se déforme que peu.

2. - Ensemble de montage selon la revendication 1, dans lequel l'élément d'adhérence à la vitre a la forme d'un tronc de cône circulaire droit (13).

3. - Ensemble de montage selon la revendication 1, dans lequel l'élément d'adhérence à la vitre a la forme d'une pyramide (23) avec une surface de base rectangulaire, en particulier carrée.

4. - Ensemble de montage selon l'une des revendications précédentes, dans lequel la seconde surface (13b) de l'élément (13) d'adhérence à la vitre est parallèle à la première surface libre (13a).

5. - Ensemble de montage selon l'une des revendications précédentes, dans lequel l'angle de cône (α) du tronc de cône (13) ou l'angle de pyramide de la pyramide (23) se situe entre 5° et 45°, en particulier entre 10° et 30°.

6. - Ensemble de montage selon l'une des revendications précédentes, dans lequel la première surface libre et/ou la seconde surface de l'élément (13 ; 23 ; 33 ; 43) d'adhérence à la vitre est revêtue d'un adhésif.

7. - Ensemble de montage selon l'une des revendications précédentes, dans lequel la première face d'extrémité du support de rétroviseur est supérieure d'au moins 25 % à la seconde surface adjacente de l'élément (13 ; 23 ; 33 ; 43) d'adhérence à la vitre.

8. - Ensemble de montage selon l'une des revendications précédentes, dans lequel la seconde surface de l'élément (43) d'adhérence à la vitre et la première face d'extrémité adjacente du support de rétroviseur (42) sont pourvues de moyens de liaison (42.4 ; 43.1) réalisés de manière à correspondre l'un à l'autre pour la liaison par complémentarité de forme du support de rétroviseur à l'élément (13 ; 23 ; 33 ; 43) d'adhérence à la vitre.

9. - Ensemble de montage selon l'une des revendications précédentes, dans lequel le support de rétroviseur est réalisé en plusieurs parties et comporte une partie pied de rétroviseur, laquelle a la première face d'extrémité reliée à l'élément d'adhérence à la vitre, et une partie d'appui reliée, en particulier de manière mobile, à la partie pied de rétroviseur, laquelle a la seconde face d'extrémité réalisée pour l'application du boîtier de rétroviseur.
